# EUROPEAN PATENT SPECIFICATION

(11) **EP 2 214 091 B1**
(45) Date of publication and mention of the grant of the patent: **30.05.2018**
(21) Application number: 10151825.6
(22) Date of filing: 27.01.2010
(51) Int. Cl.: G06F 1/16, G06F 3/0488, G06F 3/041, G09G 5/10

(54) **Mobile terminal having dual touch screen and method for displaying user interface thereof**
Mobiles Endgerät mit Doppelberührungsbildschirm und Verfahren zur Anzeige der Benutzerschnittstelle dafür
Terminal mobile doté d'un double écran tactile et procédé d'affichage de l'interface utilisateur correspondant

(30) Priority: 30.01.2009 KR 20090007313
(43) Date of publication of application: 04.08.2010
(73) Proprietor: Samsung Electronics Co., Ltd., Suwon-si, Gyeonggi-do, 443-742 (KR)
(72) Inventor: Kim, Hyun Jin, Gyeonggi-do (KR); Kwak, Ji Yeon, Gyeonggi-do (KR); Park, Yong Gook, Gyeonggi-do (KR); Yoon, Soo Yeoun, Gyeonggi-do (KR)
(74) Representative: HGF Limited

(56) References cited:
- EP-A2- 1 923 861
- US-A1- 2003 052 903
- US-A1- 2003 085 870
- US-A1- 2003 234 768
- US-A1- 2007 146 344
- US-A1- 2007 234 220
- US-A1- 2007 291 015
- HINCKLEY K ET AL: "SENSING TECHNIQUES FOR MOBILE INTERACTIONS", PROCEEDINGS OF THE 2000 ACM SIGCPR CONFERENCE. CHICAGO. IL, APRIL 6 - 8, 2000; [ACM SYMPOSIUM ON USER INTERFACE SOFTWARE AND TECHNOLOGY], NEW YORK, NY : ACM, US, 6 April 2000 (2000-04-06), pages 91-100, XP007917503, ISBN: 978-1-58113-212-0
- WIGDOR D ET AL: "LucidTouch: A See-Through Mobile Device", UIST 2007. PROCEEDINGS OF THE 20TH. ANNUAL ACM SYMPOSIUM ON USER INTERFACE SOFTWARE AND TECHNOLOGY, OCTOBER 7 10, 2007, NEWPORT, RHODE ISLAND, USA; [ACM SYMPOSIUM ON USER INTERFACE SOFTWARE AND TECHNOLOGY], NEW YORK, NY : ACM, US, 7 October 2007 (2007-10-07), pages 1-10, XP002605664, ISBN: 978-1-59593-679-2

## Description

### BACKGROUND OF THE INVENTION

### FIELD OF THE INVENTION

Exemplary embodiments of the present invention relate to a portable terminal capable of displaying a user interface, more particularly to, a portable terminal having a two-sided touch screen and a method of displaying a user interface according to a touch event.

### DESCRIPTION OF THE BACKGROUND

A touch screen, as a part of a display unit and an input unit, can be implemented as a device, and can be deployed in various terminals such as a computer and a portable terminal. A touch screen, as a form of a touch sensor can be utilized for detecting a sensing activity applied to a display unit. In addition, a touch screen can detect a touch event according to a contact or a release applied by an input tool such as a user's finger or a stylus via a touch sensor.

To promote greater adoption, manufacturers of a mobile terminal effort to develop a dual touch screen typically including two touch sensors formed on the front side and the back side of a display unit to detect a touch event applied from both surfaces of the touch screen. The display unit of the dual touch screen is made of a transparent material, and its transparency is changed according to brightness of displayed color ranging from '0' to '100' depending on the brightness.

However, if color displayed in the display unit getting to too bright or too dark user cannot accurately touch a position at which his desired contents are displayed on either the backside or front side of the dual touch screen.

Published US patent application US2007/291015 discloses a portable terminal having a touchscreen with touch sensors on each face of the touchscreen. To indicate where the user is touching the screen, this touchscreen has a highlight facility.

Published US patent application US2007/0146344 discloses highlighting (or dimming) of contents displayed on a user interface screen.

### SUMMARY OF THE INVENTION

These and other needs are addressed by the present invention, in which exemplary embodiments of the present invention provide a portable terminal having a two-sided touch screen and a method of displaying a user interface to the portable terminal.

Additional features of the invention will be set forth in the description which follows, and in part will be apparent from the description, or may be learned by practice of the invention.

Still other aspects, features, and advantages of the present invention are readily apparent from the following detailed description, simply by illustrating a number of particular embodiments and implementations, including the best mode contemplated for carrying out the present invention. The present invention is also capable of other and different embodiments, and its several details can be modified in various obvious respects, all without departing from the scope of the present invention. Accordingly, the drawing and description are to be regarded as illustrative in nature, and not as restrictive.

Exemplary embodiments of the present invention disclose a method of displaying a user interface. The method includes a user interface including a background and a content to a display unit. The method also includes changing brightness of the user interface according to a touch and a tilt event to a portable terminal. The portable terminal includes two-sided touch screen having a first touch sensor and a second touch sensor formed the respective side of the portable terminal.

Exemplary embodiments of the present invention disclose a portable terminal capable of displaying a user interface. The terminal includes a touch screen having a display unit including two sides to display a user interface. The user interface includes a background screen and a content. And the touch screen is configured to detect a touch event via a first touch sensor and a second touch sensor formed to each side of the display unit. The terminal also includes a controller to control the display unit to change brightness of the user interface according to the touch event detected via the touch screen.

Exemplary embodiments of the present invention disclose method for adjusting brightness of content and background of user interface. The method includes receiving a touch event detected from a side of two-sided display device. The method also includes determining the touch event transmitted from each side of the display device based on a direction, a location, movement, duration of the detected event and tilt angle of the device, the determination corresponding to a user interface comprising a content and a background. The method also includes adjusting brightness selectively to the content and the background according to the determined touch event. The content of the user interface includes a content image, a letter, a figure and a number representing the user interface other than the background.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.
FIG. 1a and FIG. 1b are exemplary views illustrating a user interface displayed, according to an area where a touch event is detected according to exemplary embodiments of the present invention.
FIG. 2a and FIG. 2b are exemplary views illustrating a user interface displayed, according to an area where a touch event is detected, according to exemplary embodiments of the present invention.
FIG. 3a and FIG. 3b are exemplary views illustrating a user interface where the background screen of contents is changed according to an area at which a touch event is detected, according to exemplary embodiments of the present invention.
FIG. 4a and FIG. 4b are exemplary view illustrating a user interface where brightness of an image is changed to an area at which a touch event is detected, according to exemplary embodiments of the present invention.
FIG. 5 is an exemplary view illustrating a user interface changed according to a state of the covered backside of a display unit, according to an exemplary embodiment of the present invention.
FIG. 6a and FIG. 6b illustrate a user interface changed according to a tilt angle of a portable terminal, according to an exemplary embodiment of the present invention;
FIG. 7 illustrates a control system of a portable terminal that can be used to implement various embodiments of the present invention.
FIG. 8 is a flowchart of a process for illustrating a method of displaying a user interface according to a detected touch event, according to exemplary embodiments of the present invention.
FIG. 9 is a flowchart of a process for illustrating a method of displaying a user interface according to a detected touch event, according to exemplary embodiments of the present invention.
FIG. 10 is a flowchart of a process for illustrating a method of changing a user interface according to a detected cover signal according to exemplary embodiments of the present invention.
FIG. 11 is a flowchart of a process for illustrating a method of changing a user interface according to a detected tilt angle of a portable terminal, according to exemplary embodiments of the present invention.

### DETAILED DESCRIPTION OF ILLUSTRATED EMBODIMENTS

An apparatus, method, and software for control of displaying a user interface of a terminal device having a two-sided touch screen are described. In the following description, for the purposes of explanation, numerous specific details are set forth in order to provide a thorough understanding of the present invention. It is apparent, however, to one skilled in the art that the present invention may be practiced without these specific details or with an equivalent arrangement. In other instances, well-known structures and devices are shown in block diagram form in order to avoid unnecessarily obscuring the present invention.

Hereinafter, "user interface" refers to any type of screen image that can be displayed in a portable terminal. For example, the user interface includes a background screen and at least one contents. In more detail, the user interface can be any screen that can be displayed to a portable terminal, such as a menu display screen for selecting functions to be performed of a portable terminal, an idle screen which can be provided when a portable terminal is in standby mode, an Internet display screen to which data downloaded through the Internet, and a data display screen which displays various types of applications such as an image, music data, and text data.

In some examples, brightness of a user interface can be changed according to a detected state of a portable terminal. The state of a portable terminal can be determined by a touch event detected from a touch screen including, for example, two touch sensors, a tilt angle of a portable terminal detected via a tilt angle detection unit such as a gyro sensor and an acceleration sensor, and a cover signal detected via a cover signal sensing unit such as a ultrasonic sensor, a touch sensor and an optical sensor.

Hereinafter, "background screen" referred to as a screen for displaying contents in a user interface. The background screen can be displayed in various colors, or can be displayed as an image with or without colors.

In some exemplary embodiments, "contents" can be displayed as an image or text on the wallpaper screen of a user interface. The contents may include an information icon associated with the state of a portable terminal, a menu icon which can select a menu that can be performed in a portable terminal, for example, retrieving a file name such as a stored image, a document, a message and a phone number, and a thumbnail.

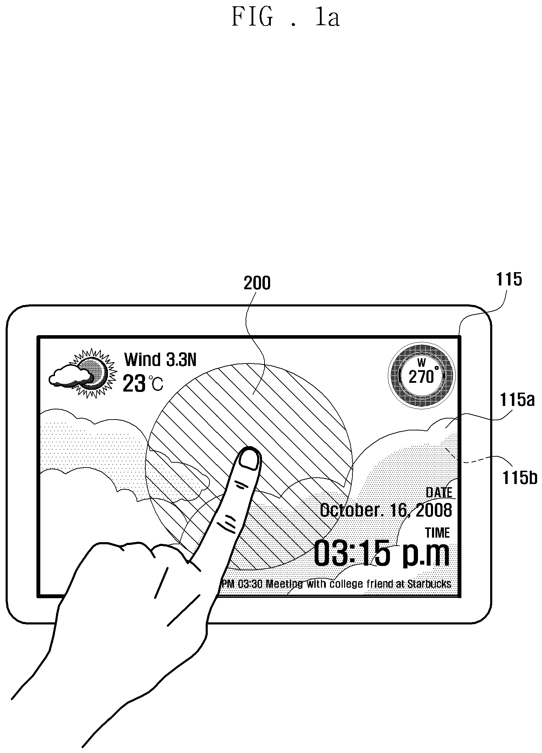

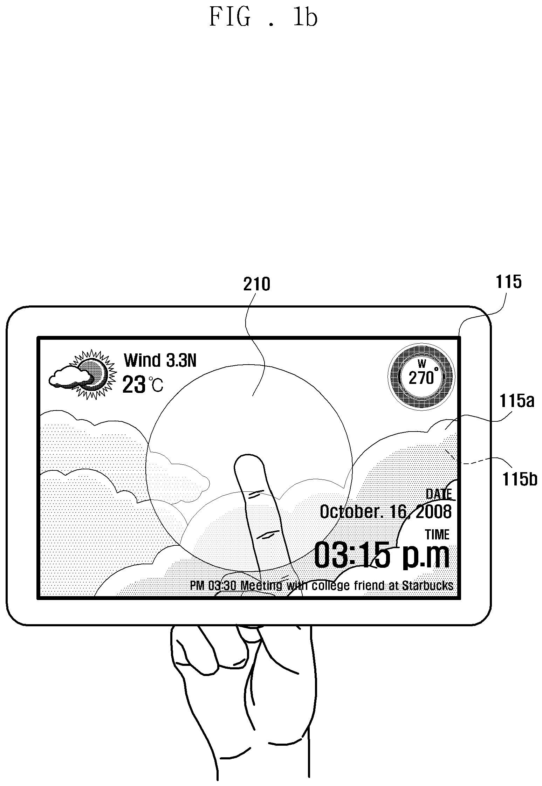

FIG. 1a and FIG. 1b are exemplary views illustrating a user interface displayed according to an area where a touch event is detected according to exemplary embodiments of the present invention. By way of example, two scenarios may be considered.

Referring to FIG. 1a, in one scenario where an idle screen is displayed to the display unit 115 having a front side 115a and a backside 115b, user can contact the front side 115a of the display unit 115 using his finger. Then, the display unit 115 can increase brightness at an area 200 where user's finger is contacted as illustrated in FIG. 1a. At this time, the display unit 115 can increase brightness to cover even a surrounding area including the area where user's finger is contacted.

Referring to FIG. 1b, in another scenario where an idle screen is displayed in the display unit 115, user can contact the backside 115b of the display unit 115 using his finger. Then, the display unit 115 can decrease brightness of an area 210 where user's finger is contacted as illustrated in FIG. 1b. At this time, the display unit 115 can decrease brightness to cover even a surrounding area including the area where user's finger is contacted.

In this example, a transparency of the display unit 115 can be changed according to brightness of displayed color. In other words, as the portion of colors with increase of brightness of the display unit 115, transparency decreases. In addition, as the portion of colors with decrease of brightness of the display unit 115, transparency increases. In addition, as transparency of the display unit 115 increases, the display unit 115 can represent a surrounding background of the portable terminal. In addition, as transparency of the display unit 150 decreases, the display unit 115 may not represent a surrounding background of the portable terminal. In some examples, a color with increasing brightness means a color close to white, a color with decreasing brightness means a color close to black. In addition, it is contemplated that an idle screen can displayed in the display unit 115, but the present invention is not limited to this example. That is, the other scenario where contents like menu icons are displayed in the display unit 115, the display unit 115 can change brightness of contents according to a touch event.

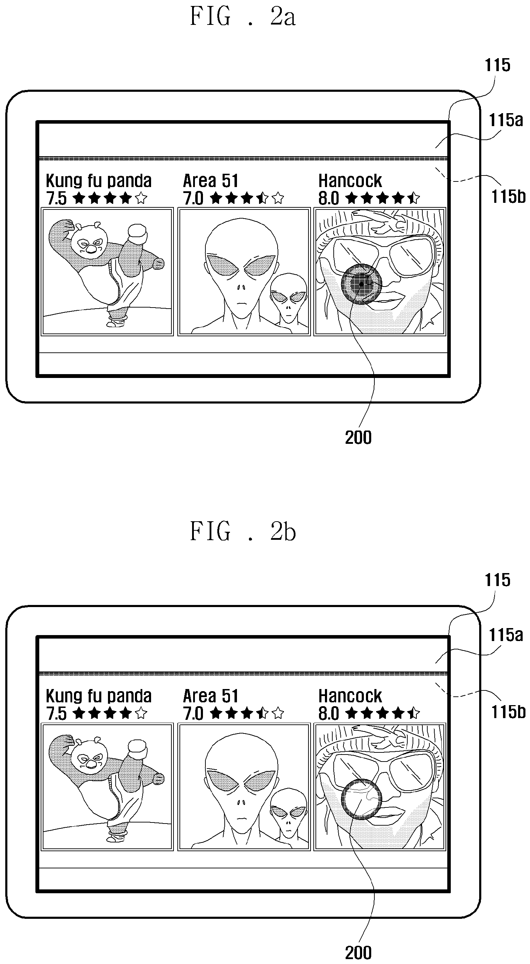

FIG. 2a and FIG. 2b are exemplary views illustrating a user interface displayed according to an area where a touch event is detected, according to another exemplary embodiment of the present invention.

Referring to FIG. 2a, a scenario where multiple contents are displayed in a display unit 115, user may contact a front side 115a of the display unit 115 using an input tool like a finger. Then, the display unit 115 can increase brightness of an area 200 at which user's finger is contacted as illustrated in FIG. 2a.

If user contacts a backside 115b of the display unit 115, the display unit 115 can decrease brightness of an area 210 at which user's finger is contacted as illustrated in FIG. 2b.

It should be understood that if user's finger moves after contacting the front side 115a of the display unit 115, the display unit 115 can increase brightness of an area according to the moving direction. In addition, if user's finger moves after contacting the backside 115b of the display unit 115, the display unit 115 can decrease brightness according to the moving direction.

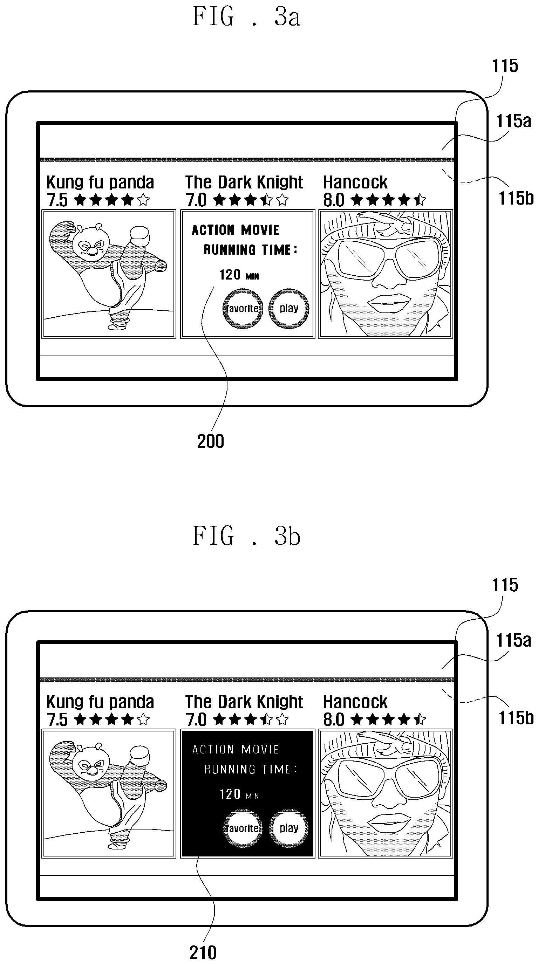

FIG. 3a and FIG. 3b are exemplary views illustrating a user interface where the background screen of contents is changed according to an area at which a touch event is detected according to exemplary embodiments of the present invention.

Referring to FIG. 3a, in a scenario where detailed content information of data is displayed as contents in the display unit 115, user may contact the front side 115a of the display unit 115 using an input tool like his finger. Then, the display unit 115 increases brightness of a background screen 200 of a screen image to which detailed information can be displayed. At this time, the display unit 115 can change color of characters (e.g., letters, numbers and figures) of the detailed content information with low brightness such as black. In addition, if user contacts the backside 115b of the display unit 115, the display unit 115 can decrease brightness of the background screen 210 of the window to which detailed content information can be displayed by a predetermined brightness level as illustrated in FIG. 3b.

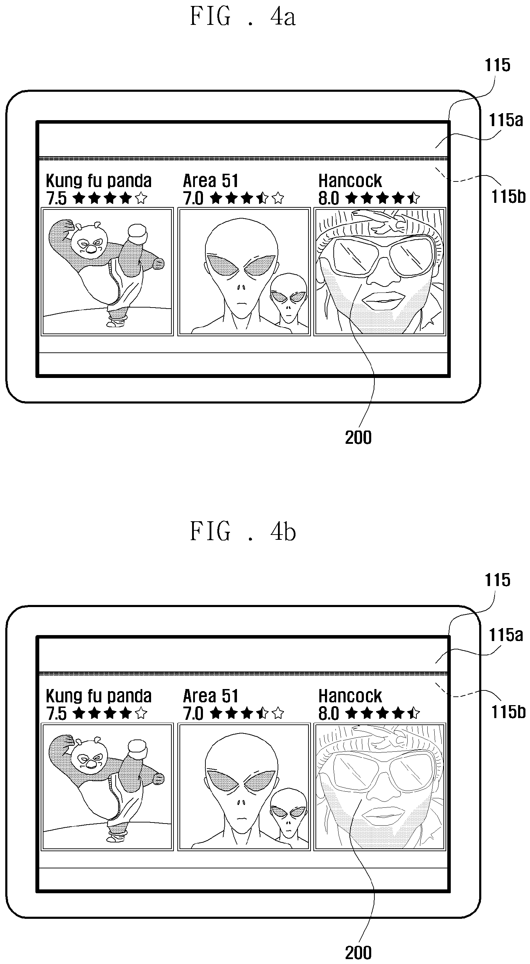

FIG. 4a and FIG. 4b are exemplary view illustrating a user interface where brightness of an image can be changed in an area at which a touch event is detected according to exemplary embodiments of the present invention.

Referring to FIG. 4a and FIG. 4b, the display unit 120 can change brightness of an image mapped to an area at which a touch event can be detected. In this example, a scenario can be provided where multiple images are displayed as contents in the display unit 115, user may contact an area at which his desired image can be displayed in the front side 115a of the display unit 115 using an input tool like his finger as illustrated in FIG. 4a. Then, the display unit 115 increases brightness of an area 200 at which a selected image can be displayed by a predetermined brightness level.

In addition, if user contacts an area at which his desired image is displayed to the backside 115b of the display unit 115 using his finger, the display unit 115 can decrease brightness of an area 200 at which a selected image can be displayed by a predetermined brightness level as illustrated in FIG. 4b.

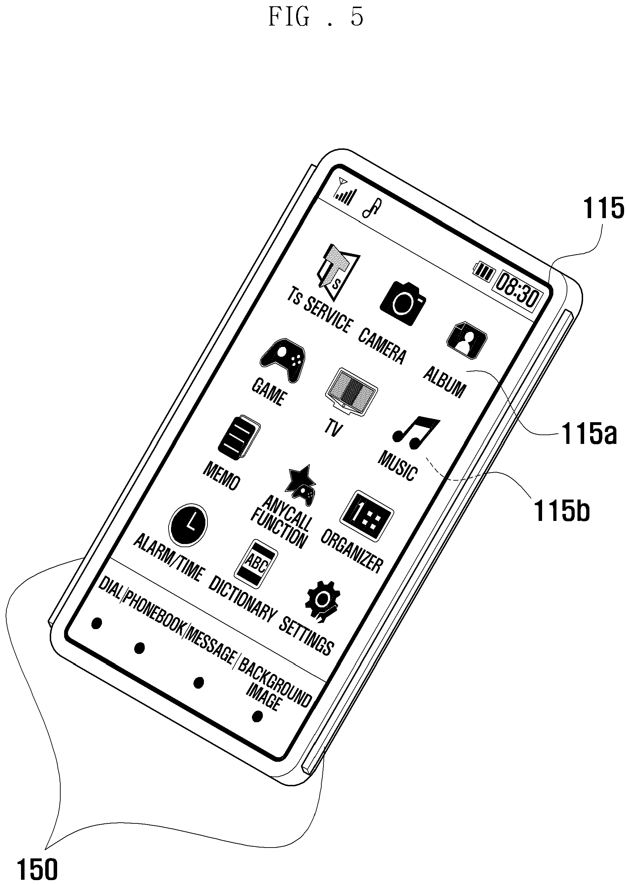

FIG. 5 is an exemplary view illustrating a user interface changed according to a state of the covered backside of a display unit, according to an exemplary embodiment of the present invention.

Referring to FIG. 5, brightness of background color can be increased according to the amount of area of the backside 115b of the display unit 115 covered. For example, a portable terminal includes a sensor 150 which can detect user's contact on both sides of the body of the portable terminal. Various types of sensors that can be used, for example, a touch sensor and an infrared sensor which can be implemented as an electrostatic capacity type and a resistive type, and such a sensor can be referred to as a cover signal sensing unit. Likewise, the portable terminal can recognize a covered area of the backside 115b of the display unit 115 that can be covered, for example, by user's hand via a cover signal sensing unit 150 deployed in the body of the portable terminal.

If user grabs a portable terminal using his one hand, the contact can be detected in a certain area of the cover signal sensing unit 150. If the cover signal sensing unit 150 detects the contact, the display unit 115 can change brightness of a user interface. In this example, the increase of the area at which a contact is detected by the cover signal sensing unit 150 means the increase of the covered area of the backside 115b of the display unit 115. In addition, a decrease of the area at which a contact is detected by the cover signal sensing unit 150 means a decrease of the covered area of the backside 115b of the display unit 115. The display unit 115 can change brightness of the user interface according to the amount of the area covered at the backside 115b of the display unit 115. That is, if the covered area of the backside 115b of the display unit 115 is large based on a predetermined threshold, the display unit 115 can increase brightness of the background color to a predetermined brightness level. In addition, if the area covered on the backside 115b of the display unit 115 is not large based on a predetermined threshold, the display unit 115 can decrease brightness of the background color to a predetermined brightness level. For example, the display unit 115 can maintain brightness of contents according to menu icons displayed on the background screen, or can change brightness of contents according to the background color. If the brightness is increased, transparency of the display unit 115 gets close to '0%,' so that the display unit 115 becomes opaque. In addition, in case the brightness is decreased, transparency of the display unit 115 gets close to 100%, so that the display unit 115 becomes transparent.

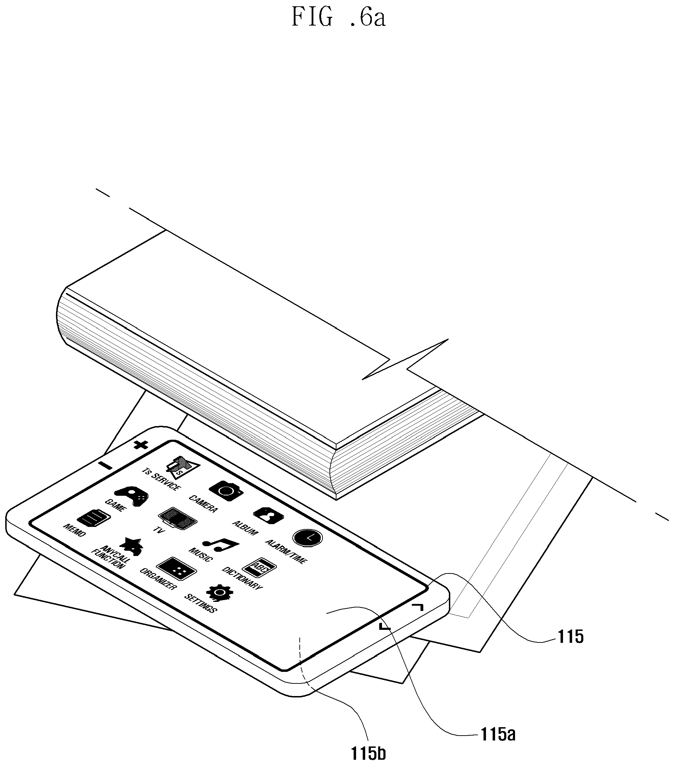

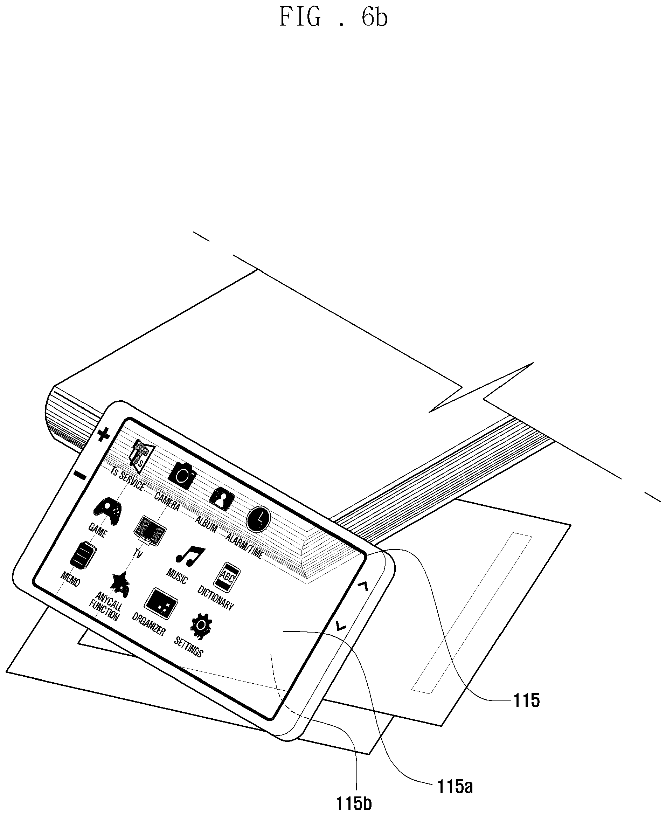

FIG. 6a and FIG. 6b illustrate a user interface changed according to a tilt angle of a portable terminal, according to an exemplary embodiment of the present invention.

As illustrated in FIG. 6a and FIG. 6b, a user interface can be changed according to a tilt angle of a portable terminal. As illustrated in FIG. 6a, if a portable terminal is laid on the ground, in other words, if a tilt angle of the portable terminal is '0,' the display unit 115 can increase brightness of the background screen 200 to a predetermined brightness level.

In addition, as illustrated in FIG. 6b, if a portable terminal is tilted at a specific angle based on the ground, the display unit 115 decreases brightness of the background 210 to a predetermined brightness level. For purpose of performing this function, the portable terminal can store a brightness level corresponding to a predetermined changed angle according to the tilt angle of the portable terminal. Hence, if the tilt of the portable terminal is detected, the portable terminal can check the angle of the tilt, and can change brightness of the background screen 210 based on the predetermined changed angle corresponding to detected angle change.

In some examples, the display unit 115 can maintain brightness of contents displayed on the background screen 210. In addition, the display unit 115 can change brightness of contents displayed on the background screen 210 to the same brightness as that of the background screen. In addition, the level compared with the tilt angle of the portable terminal to change brightness of the user interface can be changed according to user setting or a manufacturer setting.

A portable terminal having two-sided touch screen of a display unit 115 can present a screen after changing brightness of a user interface according to detection of the state of the portable terminal. In some examples, the display unit 115 can sequentially change brightness of a user interface according to a predetermined brightness level. In addition, the display unit 115 can increase or decrease brightness of a user interface to a predetermined brightness level.

For the illustration purpose, it is assumed that, if brightness of a user interface needs to be increased, brightness can be set to be increased by '2' levels, and if brightness of a user interface needs to be decreased, brightness is set to be decreased by '2' levels. Then, the display unit 115 can increase brightness of the user interface by 2 levels, or can decrease brightness of the user interface by '2' levels according to the changing status of the portable terminal. In addition, if the brightness of the user interface is increased, transparency of the display unit 115 gets close to '0%,' so that the display unit 115 becomes opaque. In addition, if the brightness of the user interface is decreased, transparency of the display unit 115 gets close to '100%,' so that the display unit 115 becomes transparent.

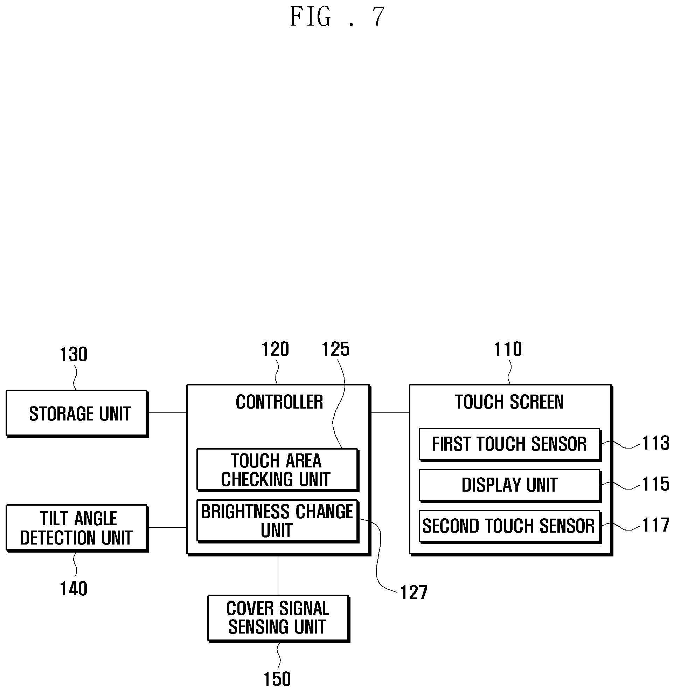

Next, a control system of a portable terminal which can display a user interface will be explained in detail with reference to FIG. 7.

FIG. 7 illustrates a control system of a portable terminal that can be used to implement various embodiments of the present invention.

Referring to FIG. 7, a portable terminal may include a touch screen 110 including a first touch sensor 113, a display unit 115 and a second touch sensor 117, a controller 120, a storage unit 130, a tilt angle detection unit 140, and a cover signal sensing unit 150.

The touch screen 110 may include a first touch sensor 113, a display unit 115 having two sides, and a second touch sensor 117. Among sides constituting the display unit 115, a side facing user's face may be referred to as a front side, and a side corresponding to the front side may be referred to as a backside. In some examples, the first touch sensor 113 can be attached on the front side of the display unit 115, and the second touch sensor 117 can be attached on the backside of the display unit 115. In addition, the first touch sensor 113 and the second touch sensor 117 can be a touch sensor of electrostatic capacity type which capable of determining a touch event by detecting the change of the electrostatic capacity, a touch sensor of resistive type which can detect a touch event according to the change of resistance, and a touch sensor of piezoelectric type which senses a touch event according to the change of pressure or the like.

The display unit 115 can display data related to overall status and operation of a portable terminal. In some examples, the display unit 115 can display various user interfaces under the control of a controller 120. In addition, the display unit 115 can change and display brightness of a user interface according to a touch event detected via two touch sensors under the control processing by the controller 120.

For example, an idle screen can be displayed to a display unit 115 as a user interface. If a touch event is detected on the front side of the display unit 115 via a first touch sensor 113, the display unit 115 can increase brightness of an area at which a touch event is detected of the idle screen to a predetermined brightness level by the control processing of the controller 120. In addition, if a touch event is detected to the backside of the display unit 115 via a second touch sensor 117, the display unit 115 can decrease brightness of an area at which the touch event is sensed to a predetermined brightness level under the control processing of the controller 120. At this time, the brightness of the display unit 115 can be changed even to cover a surrounding portion of the area at which the touch event is detected according to the size of the area of a preset area under the control processing of the controller 120.

In addition, the brightness of the background color of the display unit 115 can be changed according to a tilt angle of the portable terminal under the control processing of the controller 120. For example, if the tilt angle of the portable terminal is detected to a predetermined tilt angle or more, the display unit 115 can increase brightness of the background color to a predetermined brightness level under the control processing of the controller 120. In addition, if the tilt angle of the portable terminal is detected less than a predetermined angle, the display unit 115 can decrease brightness of the background color to a predetermined brightness level under the control processing of the controller 120. At this time, the display unit 115 can maintain brightness of contents displayed to the background. Also, the display unit 115 can change brightness of the displayed contents into the brightness of the color of the background screen.

The display unit 115 can change brightness of the background color of a screen to a predetermined brightness level according to a cover signal detected via a cover signal sensing unit 150 under the control processing of the controller 120. For example, the display unit 115 may change the brightness of a portion of the background screen according to the detected cover signal. Here, the cover signal is a signal that can be detected when a cover event applied to either side of the display unit 115 by user's hand.

The first touch sensor 113 and the second touch sensor 117 can detect a touch event applied by an input tool like user's finger that can be touched or released to and from the surface of a touch screen 110. In addition, the first touch sensor 113 and the second touch sensor 117 can determine the coordinated touch event corresponding to an area where a touch event is detected, and can transmit the signal corresponding to the detected coordinated touch event to the controller 120 for processing. In addition, the first touch sensor 113 and the second touch sensor can respectively be attached on a portion of the front side and a portion of the backside of the display unit 115. Hence, if a user touches the front side of the display unit 115 using his finger and releases the touch, the first touch sensor 113 can detect the touch event. In addition, if the user touches the backside of the display unit 115 and releases the touch, the second touch sensor 117 can detect the touch event. In addition, if the user touches the front side and the backside of the display unit 115 using his finger and releases the touch, the first touch sensor 113 and the second touch sensor 117 can detect the touch event. Here, the touch event includes a touch and release of the touch or a movement and release of the movement detected via at least one of the first touch sensor 113 and the second touch sensor 117 and determined by the controller 120 after processing.

The controller 120 can control overall status and operations of deployed components that can constitute a portable terminal. Here, the controller 120 can change brightness of a user interface according to a detected state of the portable terminal. For purpose of performing this function, the controller 120 further can include a touch area checking unit 125 and a brightness change unit 127.

The touch area checking unit 125 can check an area where a touch event and/or coordinated touch event is detected to an area at which a contact and/or release is detected, and a detected signal can be transmitted from the first touch sensor 113 or the second touch sensor 117 of the touch screen 110. Based on the detecting of the touch event, the touch area checking unit 125 can determine whether a touch event is generated from the front side of the display unit 115, or a touch event is generated on the backside of the display unit 115, or a touch event is generated on the front side and the backside of the display unit 115 via the first touch sensor 113 and the second touch sensor 117 of the touch screen 110. In addition, the touch area checking unit 125 can determine whether a contact detected to the surface of the touch screen 110 moves via the first touch sensor 113 or the second touch sensor 117.

The brightness change unit 127 can change brightness of the user interface according to the detected state of the portable terminal. For example, the brightness change unit 127 can check the average brightness of the user interface displayed on the display unit 115. That is, the brightness change unit 127 checks the overall brightness for all colors used in the user interface displayed in the display unit 115. In addition, the brightness change unit 127 can calculate the average value for brightness of each checked color.

The brightness change unit 127 can increase or decrease the calculated average brightness to a predetermined brightness level according to the state of the portable terminal. For example the state of the portable terminal can be changed in the state where a user interface whose average brightness '3' is displayed in the display unit 115. Then, the brightness change unit 127 can check the average brightness '3,' and change the average brightness to a predetermined brightness level according to the state of the portable terminal. Here, the state of the portable terminal can be detected via the first touch sensor 113 or the second touch sensor 117 of the touch screen 110 which can detect a touch event, a tilt angle detection unit 140 which can detect the tilt angle of the portable terminal, and a cover signal sensing unit 150 which can detect which side of the display unit 115 is covered.

For example, the brightness change unit 127 can change brightness of the user interface displayed in the display unit 115 by a predetermined brightness level according to a touch event sensed via the first touch sensor 113 or the second touch sensor 117 of the touch screen 110. For the illustration purpose, it is assumed that a preset level is '3.' If a touch event is detected from the front side of the display unit 115, the brightness change unit 127 can increase the brightness of the user interface by '3' which is a predetermined brightness level. In addition, if a touch event is detected from the backside of the display unit 115, the brightness change unit 127 can decrease the brightness of the user interface by '3' which is a predetermined brightness level. It is contemplated that the brightness change unit 127 can change the entire brightness of the user interface according to the detected touch event, but the present invention is not limited to this example. In other words, the brightness change unit 127 can change the brightness of an area where a touch event is detected. In addition, the brightness change unit 127 can change the brightness of contents mapped to an area where a touch event is detected.

In addition, the brightness change unit 127 can change the brightness of the user interface by a predetermined brightness level according to the tilt angle of the portable terminal detected via the tilt angle detection unit 140. In other words, if the tilt angle of the portable terminal is detected as a predetermined angle or more, the brightness change unit 127 can decrease the brightness of the user interface. On the other hand, if the tilt angle of the portable terminal is less than a predetermined angle, the brightness change unit 127 can increase the brightness of the user interface. For the purpose of illustration, it is assumed that a preset angle is '45°.' In addition, it is assumed that '+2' levels can be predetermined for the increase of brightness and '-2' levels can be predetermined set for the decrease of brightness. Then, the brightness change unit 127 can check the overall brightness level of the user interface displayed to the display unit 115. In addition, the brightness change unit 127 can check whether the detected tilt angle is the same as or more than '45°,' which is a predetermined angle. Here, if the tilt angle is '45°' or more, the brightness change unit 127 can decrease the brightness of the user interface by '2' levels which are a predetermined level. On the other hand, if the tilt angle is less than '45°,' the brightness change unit 127 can increase the brightness of the user interface by '2' levels which are a predetermined level.

In addition, the brightness change unit 127 can change the user interface according to the brightness level corresponding to the tilt angle changed according to the state of a portable terminal. For example, if the tilt angle of the portable terminal is detected in the order of '0°,' '30°,' '60°' and '90°' angles based on the horizontal direction the portable terminal, the brightness change unit 127 can sequentially change brightness of the user interface in the order of '1,' '2,' '3' and '4' levels. Here, the larger a number which is predetermined brightness of the user interface is, the higher the brightness is indicated, whereas the smaller the preset number is, the lower the brightness is indicated.

In addition, the brightness change unit 127 can change the brightness of the user interface corresponding to the detected tilt angle. For example, if the tilt angle of a portable terminal is '0°,' the brightness is set as '0' level, if the tilt angle is '30°,' the brightness is set as '1' level, if the tilt angle is '60°,' the brightness is set as '3' level, and if the tilt angle is '90°,' the brightness is set as '4' level. Hence, if '60°' is detected as a tilt angle of a portable terminal, the brightness change unit 127 can change the brightness of the user interface into '3' level which corresponds to the detected tilt angle '60°.'

In addition, the brightness change unit 127 can change brightness of the user interface by a predetermined level according to a cover signal detected via the cover signal sensing unit 150. For the illustration purpose, it is assumed that a preset level is '4.' If a cover signal is sensed through the cover signal sensing unit 150, the brightness change unit 127 can increase brightness of the user interface by '4' which is a predetermined level. For example, the brightness change unit 127 can change brightness of the entire user interface or a half of the user interface according to the area where a cover signal is detected from the backside of the display unit 115.

Next, the controller 120 can display a user interface and brightness of the user interface can be changed via the brightness change unit 127 according to an area checked via the touch area checking unit by controlling the display unit 115.

The storage unit 130 can store application programs related to functions that can be executed in a portable terminal and various data that can be generated when performing functions. Particularly, the storage unit 130 can store a user interface which can be displayed in the display unit 115. For example, the user interface can be divided according to each brightness level and stored accordingly. Here, the user interface can include contents which can select a function that can be performed in a portable terminal and the background screen which can display at least one of the contents. In addition, the storage unit 130 can store a predetermined brightness level to change the brightness according to the state of a portable terminal which is detected via a touch screen 110, a tilt angle detection unit 140, and a cover signal sensing unit 150. In addition, the storage unit 130 can store brightness information for each color displayed in the user interface. For the illustration purpose, it is assumed that brightness of black is '0,' brightness of white is '10,' brightness of yellow is '8,' brightness of red is '6,' brightness of blue '4,' and brightness of gray is '2.' Then, the storage unit 130 can map colors to their corresponding brightness information '0,' '10,' '8,' '6,' '4' and '2,' and can store the mapping.

The tilt angle detection unit 140 can determine the state of a portable terminal, for example, tilt, and movement or the like. Here, the tilt angle detection unit 140 can detect a tilt angle generated according to the state of a portable terminal. For example, the tilt angle detection unit 140 can include at least one of a terrestrial magnetic sensor which can sense the state of a portable terminal according to the change of the magnetic field, a gyro sensor which can sense the state of a portable terminal according to the change of the rotational angular speed, or an acceleration sensor which can sense the state of a portable terminal according to the change of acceleration of gravity. For the purpose of illustration, it is assumed that the tilt angle detection unit 140 is constituted as an acceleration sensor. Then, the tilt angle detection unit 140 can detect the change of acceleration of gravity via the acceleration sensor, and can detect the tilt angle of the portable terminal. The controller 120 can change the brightness of the user interface displayed in the display unit 115 using the detected tilt angle according to a predefined process.

The cover signal sensing unit 150 can perform a function to determine which side of the display unit 115 can be covered by user. For example, the cover signal sensing unit 150 can include a sensor such as a ultrasonic sensor, a touch sensor, and an optical sensor or the like. In addition, the cover signal sensing unit 150 can be installed on both sides of the body of the portable terminal, or can be installed at the edge of the display unit 115 by way of configuration. If user grabs a portable terminal using his one hand to use the portable terminal, the cover signal sensing unit 150 can check an area at which user's hand is contacted. The cover signal sensing unit 150 can transmit a contact signal to the controller 120. Then, the controller 120 can check areas at which user's hand is contacted via the touch area checking unit 125, and can change brightness of the user interface corresponding to the contact area among the areas displayed in the display unit 115 according to a predetermined brightness level via the brightness change unit 127.

A display device, as shown in FIG. 1a and FIG. 1b, and a control system as shown in FIG. 7 may include a bus (not shown) or other communication mechanisms for communicating data, and a controller 120 including a processor (not shown) coupled to the bus for processing information. The display device may also include storage unit 130, which may be a random access memory (RAM) or a dynamic storage device coupled to the bus for storing information and instructions to be executed by the processor. The storage unit 130 may also be used for storing temporary variables or intermediate information during execution of instructions by the processor. The storage unit 130 may be a read only memory (ROM) or other static storage device coupled to the bus for storing static information and instructions for the processor. The storage unit 130 may include a series of applications to operate the display device. Examples of suitable applications include a touch application, a pressure application, an image application, and a direction application.

The touch screen 110, including display unit 115, may be coupled to the touch screen 110. Examples of the display unit 120 include, for example, a liquid crystal display, a flexible display, or active matrix display, for displaying information to the user. In some cases, the touch screen 110 may be an input device, such as a keyboard, including alphanumeric and other keys. The input device may be coupled to the bus and may communicate information and command selections to the processor. The input device may include various types of sensors (e.g., touch sensors 113 and 117) and may include a plurality of touch zones in the touch screen 110 for detecting user detect. The input device may further include a cursor control, such as a mouse, a trackball, or cursor direction keys, for communicating direction information and command selections to the processor and for controlling cursor movement on the display unit 115.

According to various exemplary embodiments of the invention, execution of the instructions contained in storage unit 130 may cause the processor to perform processes according to the instructions. The controller 120 may include one or more processors in a multi-processing arrangement to execute the instructions contained in storage unit 130. Hard-wired circuitry may be used in place of, or in combination with, software instructions to implement one or more of the exemplary embodiments of the present invention. For example, reconfigurable hardware, such as Field Programmable Gate Arrays (FPGAs), can be used, and functionality and connection topology of the FPGA logic gates may be customized at run-time, typically by programming memory look up tables. Thus, exemplary embodiments of the present invention are not limited to any specific combination of hardware circuitry and/or software.

The display device may also include at least one communication interface unit (not shown). The communication interface unit may provide a two-way data communication coupling to a network link (not shown). The communication interface unit may send and receive electrical, electromagnetic, or optical signals that can carry digital data streams representing various types of information. Further, the communication interface unit may include peripheral interface devices, such as a Universal Serial Bus (USB) interface, or a PCMCIA (Personal Computer Memory Card International Association) interface.

The processor may execute transmitted code and/or may store the transmitted code in the storage unit 130, or in other non-volatile storage. In some cases, the display device may obtain application code in the form of a carrier wave.

A "computer-readable medium" may refer to any medium that provides instructions to the processor for execution. Such a medium may be implemented in various forms, including but not limited to, non-volatile media, volatile media, and transmission media. Non-volatile media may include, for example, optical or magnetic disks, such as the storage device. Volatile media may include dynamic memory, such as main memory. Transmission media may include coaxial cables, copper wire and fiber optics, including the wires that comprise the bus. Transmission media can also take the form of acoustic, optical, or electromagnetic waves, such as those generated during radio frequency (RF) and infrared (IR) data communications. Common forms of computer-readable media include, for example, a floppy disk, a flexible disk, hard disk, magnetic tape, any other suitable magnetic medium, a compact disk read-only memory (CD-ROM), compact disc rewritable (CDRW), digital video disc (DVD), any other suitable optical medium, punch cards, optical mark sheets, any other suitable physical medium with patterns of holes or other optically recognizable indicia, a random-access memory (RAM), a programmable read-only memory (PROM), and erasable programmable read-only memory (EPROM), a FLASH-EPROM, any other memory chip or cartridge, and a carrier wave.

Various forms of computer-readable media may be involved in providing instructions to a processor for execution. For example, the instructions for carrying out at least part of the present invention may be implemented on a magnetic disk of a remote computer. The remote portable terminal may load the instructions into the storage unit 130 and may send the instructions, for example, over a telephone line using a modem. A modem of a local system may receive the data on a telephone line and/or may be used an infrared transmitter to convert the data to an infrared signal and may transmit the infrared signal to the display device. The display device may receive information and instructions provided by the infrared signal. The bus may provide the information and instructions to the storage unit 130, from which a processor may retrieve and execute the instructions. The instructions received by storage unit 130 may optionally be stored either before or after execution by the controller 120.

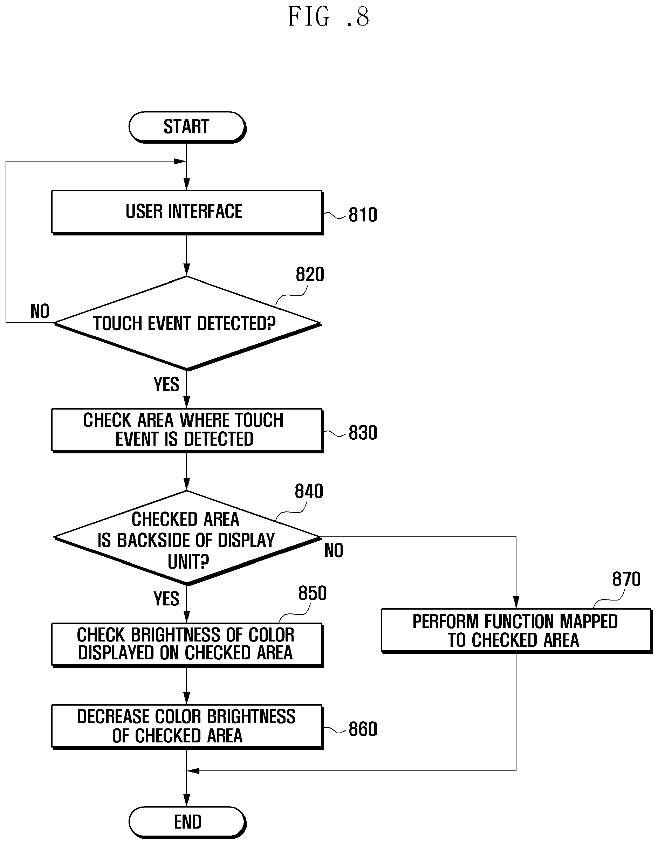

Next, a method of displaying a user interface according to the state of a portable terminal will be explained in detail with reference to FIG. 8, FIG. 9, FIG. 10 and FIG. 11.

FIG. 8 is a flowchart of a process for illustrating a method of displaying a user interface according to a detected touch event, according to an exemplary embodiment of the present invention.

Referring to FIG. 8, as in step 810, the controller 120 can control the display unit 115 to display a user interface according to user's selection. The user interface can be displayed including any type of a screen image that can be displayed in a portable terminal, such as a menu user interface which can display menu contents for selecting functions associated with the menu that can be performed in a portable terminal, an Internet user interface which can display contents downloaded through the Internet, and an image user interface which can display contents including an image.

The controller 120 determines, per step 820, whether a touch event can be detected via a touch screen 110. If a touch event is detected, the controller 120 can check, in step 830, an area where a touch event is detected. In addition, the controller 120 can check whether the touch event can be included in the front side of the display unit 115 or in the backside of the display unit 115, per step 840. If an area where a touch event is detected that is covered by the backside of the display unit 115, in step 850, the controller 120 can check brightness of the color displayed in the checked area. In addition, the controller 120 can control, in step 860, the display unit 115 to decrease brightness of the checked area to a predetermined brightness level.

The controller 120 can control the display unit 115 to decrease brightness of an area at which a touch event is detected. In addition, the controller 120 can control the display unit 115 to decrease brightness of even to cover a surrounding area within a predetermined range based on the area where a touch event can be detected. In addition, the controller 120 can control the display unit 150 to decrease brightness of the background screen of a user interface.

On the other hand, if an area where a touch event is detected including the front side of the display unit 115, the controller 120 can perform, in step 870, a function mapped to the checked area. The controller 120 can control the display unit 115 to increase the brightness of an area at which a touch event is detected to a predetermined brightness level. Here, the controller 120 can control the display unit 115 to increase brightness of only an area at which a touch event can be detected. In addition, the controller 120 can control the display unit 115 to increase brightness of even to cover a surrounding area within a predetermined range based on the area where a touch event is detected. In addition, the controller 120 can control the display unit 115 to increase the brightness of the background screen of the user interface.

Likewise, the controller 120 can control the display unit 115 to change brightness of a user interface according to a detected touch event. For example, an idle screen can be displayed as a user interface. Then, the controller 120 can change brightness of an area at which a touch event is detected according to a touch event detected via a touch screen 110. In some examples, a website can be displayed as a user interface, the controller 120 can change brightness of the background screen of the website according to a touch event detected via the touch screen 110.

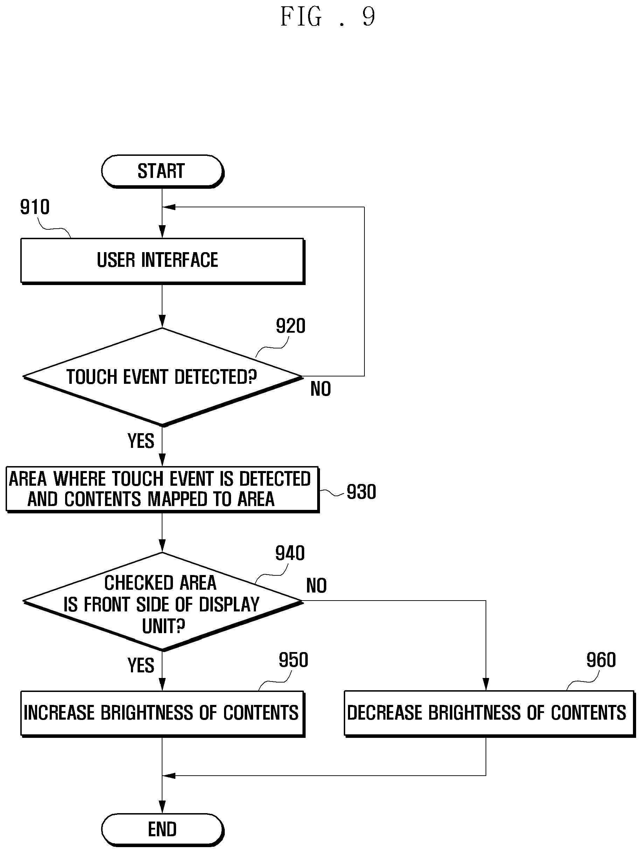

Next, a method of changing brightness of contents displayed in a user interface according to a touch event is explained with reference to FIG. 9.

FIG. 9 is a flowchart of a process for illustrating a method of displaying a user interface according to a detected touch event, according to exemplary embodiments of the present invention.

Referring to FIG. 9, in step 910, the controller 120 can control the display unit 115 to display a user interface according to user's selection.

In some examples, a user interface including any type of screen that can be displayed to a portable terminal, such as a menu user interface which can display menu contents for selecting menu functions that can be performed in a portable terminal, an Internet user interface which can display contents downloaded via the Internet, and an image user interface including image contents.

As in step 920, the controller 120 can determine whether a touch event is detected via a touch screen 110. If a touch event is detected, the controller 120 can check an area at which a touch event is detected and contents mapped to the area, per step 930.

The controller 120 determines, in step 940, whether the checked area is the front side of the display unit 115. That is, the control unit 120 can check whether an area at which a touch event is detected is an area including the front side of the display unit 115 or an area including the backside of the display unit 115.

If the checked area is included in the front side of the display unit 115, in step 950, the control unit 120 can control the display unit 115 to increase brightness of checked contents to a predetermined brightness level. On the other hand, if the checked area is not included in the front side of the display unit 115, but is included in the backside, the controller 120 can control the display unit 115 to decrease brightness of contents to a predetermined brightness level, per step 960. Likewise, the controller 120 can change brightness of contents of the user interface to a predetermined brightness level, and can display the contents in the display unit 115. For example, a user interface displayed in the display unit 115 can include at least one contents corresponding to an image. In addition, a touch event can be detected in an area at which contents are mapped. Then, the controller 120 can change brightness of an image corresponding to contents according to whether the touch event is detected on the front side of the display unit 115 or is detected on the backside, and can display the image in the display unit 115.

Next, a method of changing a user interface according to a cover signal detected via a cover signal sensing unit 150 is explained.

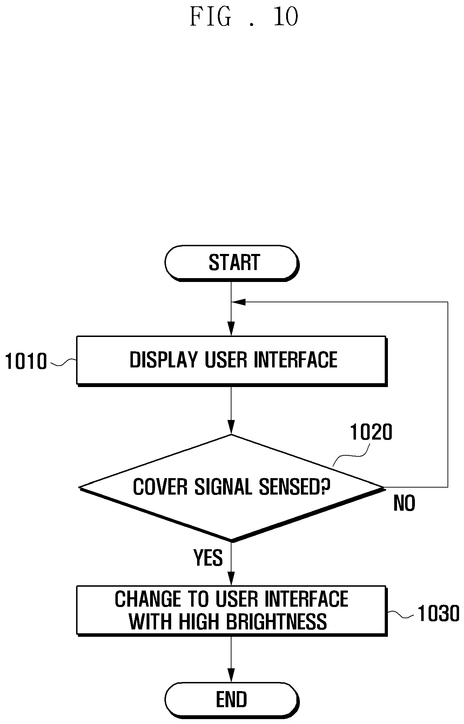

FIG. 10 is a flowchart of a process for illustrating a method of changing a user interface according to a detected cover signal, according to exemplary embodiments of the present invention.

Referring to FIG. 10, in step 1010, a controller 120 can control a display unit 115 to display a user interface according to user's selection.

In some examples, a user interface can be means to display a screen image that can be displayed in a portable terminal, such as a menu user interface which displays menu contents for selecting menu functions that can be performed in a portable terminal, an Internet user interface which can display contents downloaded via the Internet, and an image user interface including an image, letter, and/or figure type contents.

As in the step 1020, the controller 120 can determine whether a cover signal is detected via the cover signal sensing unit 150. If a cover signal is received, the controller 120 can control the display unit 115 to increase brightness of the user interface according to a predetermined brightness level, per step 1030.

If user grabs a portable terminal using his hand to execute one of functions of the portable terminal, the portable terminal can provide a user interface with high brightness. High brightness means that transparency of the display unit 115 is close to 0%. Hence, the display unit 115 does not reflect the surrounding background of a portable terminal such that it has an advantage to display the user interface.

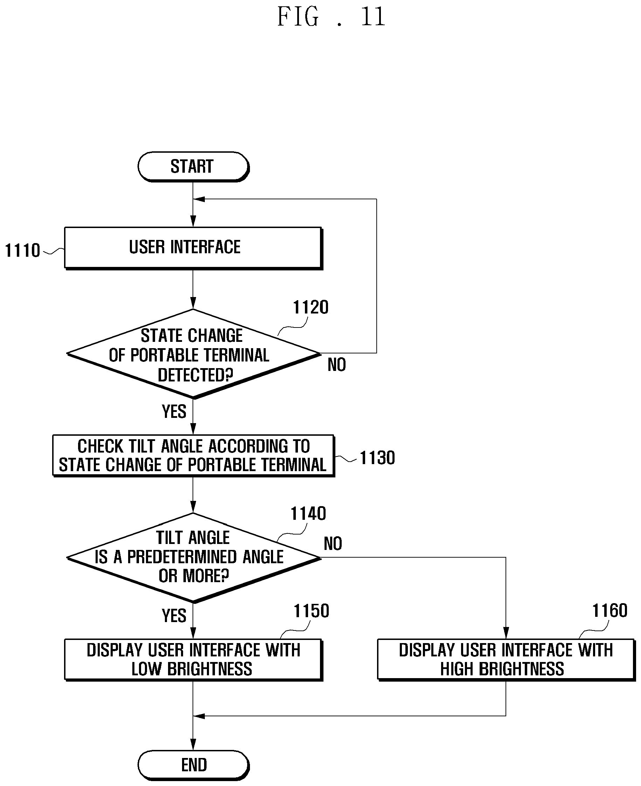

Next, a method of changing a user interface according to a tilt angle of a portable terminal is explained with reference to FIG. 11.

FIG. 11 is a flowchart of a process for illustrating a method of changing a user interface according to a detected tilt angle of a portable terminal, according to exemplary embodiments of the present invention.

Referring to FIG. 11, in step 1110, a controller 120 can control a display unit 115 to display a user interface according to user's selection.

Here, a user interface that can be displayed including an type of a screen image that can be displayed in a portable terminal, such as a menu user interface which can display menu contents for selecting menu functions that can be performed in a portable terminal, an Internet user interface which can display contents downloaded via the Internet, and an image user interface which can display contents including an image.

In addition, the controller 120 determines, in step 1120, whether a state change of a portable terminal can be detected via a tilt angle detection unit 140. If a state change of a portable terminal is detected, the controller 120 can check a tilt angle according to a change status of the portable terminal, per step 1130.

In addition, the controller 120 can determine, in step 1140, whether a checked tilt angle is a predetermined angle or more. If the checked tilt angle is determined to a predetermined angle or more, in step 1150, the controller 120 can control the display unit 115 to change the currently displayed user interface into a user interface with low brightness according to a predetermined brightness level. On the other hand, if the checked tilt angle is determined less than a predetermined angle, in step 1160, the controller 120 can control the display unit 115 to change the currently displayed user interface into a user interface with high brightness according to a predetermined level. Here, the controller 120 can increase or decrease brightness of the user interface based on the predetermined brightness level.

In some examples, the controller 120 can change brightness of a user interface to a predetermined brightness level according to a tilt angle of a portable terminal detected via a tilt angle detection unit 140. For example, if the angle of a portable terminal gradually increases, the controller120 can gradually decrease or increase brightness of the user interface.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

## Claims

1. A method comprising:
displaying, via a two-sided touchscreen (110) made of transparent material, a user interface comprising a background and content, the transparent touchscreen comprising:
a first touch sensor (113) disposed on a first surface of the touchscreen (110); and
a second touch sensor (117) disposed on a second surface of the
touchscreen (110), the second surface opposing the first surface;
detecting a touch event with the touchscreen (110);
determining whether the touch event is detected through the first touch sensor (113) or the second touch sensor (117); and
changing transparency of the user interface based on the determination, wherein, in response to the determination that the touch event is detected through the first touch sensor, the transparency is decreased, and
wherein, in response to the determination that the touch event is detected through the second touch sensor, the transparency is increased,
wherein changing the transparency of the user interface comprises changing a brightness of the touchscreen (110), the transparency of the user interface decreasing with increased brightness and increasing with decreased brightness.

2. The method of claim 1, further comprising:
determining an average brightness of the user interface by calculating brightness of the background and the content,
wherein changing the transparency of the user interface based on the determination comprises: changing the average brightness to a determined level.

3. The method of claim 1, wherein the touch event comprises an area of contact with the transparent touchscreen; and wherein
changing transparency of the user interface based on the determination comprises:
changing transparency of the user interface in the area of contact; and
maintaining transparency of the user interface in a second area disposed outside the area of contact.

4. The method of claim 3, wherein changing the transparency of the user interface based on the determination further comprises:
changing transparency of the user interface in a third area of the user interface disposed between the area of contact and the second area.

5. The method of claim 1, wherein the touch event comprises an area of contact with the transparent touchscreen; and
wherein changing transparency of the user interface based on the determination further comprises:
determining a second area of the user interface associated with the area of contact;
changing transparency of contents mapped to the second area; and
maintaining transparency of the user interface in a third area of the user interface disposed outside the second area.

6. The method of claim 1, wherein the transparent touchscreen is disposed in a terminal, the method further comprising:
determining a tilt angle of the terminal; and
changing the transparency of the user interface according to the tilt angle.

7. The method of claim 1, further comprising:
determining a size of an area of the user interface corresponding to the touch event,
wherein an extent of change in the transparency is based on the size.

8. A terminal comprising:
a two-sided touchscreen (110) made of transparent material configured to display a background and content in association with a user interface, the touchscreen (110) comprising: a first touch sensor (113) disposed on a first surface of the transparent touchscreen (110) and a second touch sensor (117) disposed on a second surface of the transparent touchscreen (110), the second surface opposing the first surface; and
a controller (120) configured to:
receive an indication of a touch event with the touchscreen (110);
determine whether the touch event is detected through the first touch sensor or the second touch sensor; and
cause, at least in part, a change in transparency of the transparent touchscreen (110) based on the determination,
wherein, in response to a determination that the touch event is detected through the first touch sensor (113), the change is a decrease in the transparency,
wherein, in response to a determination that the touch event is detected through the second touch sensor (117), the change is an increase in the transparency, and
wherein the changing transparency of the user interface comprises changing a brightness of the touchscreen (110), the transparency of the user interface decreasing with increased brightness and increasing with decreased brightness.

9. The terminal of claim 8, wherein the controller is configured to:
determine, in response to reception of the indication, an average brightness level of the user interface; and
cause, at least in part, the change in transparency by changing the average brightness to a predetermined brightness level of the user interface.

10. The terminal of claim 8, wherein:
the touch event comprises an area of contact with the transparent touchscreen; and
the controller is configured to:
cause, at least in part, the change in transparency to be effectuated in the area of contact; and
cause, at least in part, transparency of the user interface in a second area disposed outside the area of contact to be maintained.

11. The terminal of claim 10, wherein the controller is configured to:
cause, at least in part, change in transparency to be effectuated in a third area of the user interface based on the determination, the third area being disposed between the second area and the area of contact.

12. The terminal of claim 8, wherein:
the touch event comprises an area of contact with the transparent touchscreen; and
the controller is configured to:
determine a second area of the user interface associated with the area of contact;
cause, at least in part, the change in transparency to be effectuated in content associated with the second area; and
cause, at least in part, transparency of the user interface in a third area disposed outside the second area to be maintained.

13. The terminal of claim 8, further comprising a tilt angle detection unit (140) configured to determine a tilt angle of the terminal,
wherein the controller (120) is configured to cause, at least in part, the transparency of the user interface to be changed according to the tilt angle.

14. The terminal of claim 8, wherein the controller is configured to:
determine a size of an area of the user interface corresponding to the touch event; and
cause, at least in part, an extent of the change in transparency to be based on the size of the area.

## Patentansprüche

1. Verfahren, umfassend:
Anzeigen, über einen zweiseitigen aus transparentem Material hergestellten Berührungsbildschirm (110), einer Benutzerschnittstelle, die einen Hintergrund und Inhalt umfasst, wobei der transparente Berührungsbildschirm umfasst:
einen ersten Berührungssensor (113), der auf einer ersten Oberfläche des Berührungsbildschirms (110) angeordnet ist; und
einen zweiten Berührungssensor (117), der auf einer zweiten Oberfläche des Berührungsbildschirms (110) angeordnet ist, wobei die zweite Oberfläche der ersten Oberfläche gegenüberliegt;
Detektieren eines Berührungsereignisses mit dem Berührungsbildschirm (110);
Ermitteln, ob das Berührungsereignis durch den ersten Berührungssensor (113) oder den zweiten Berührungssensor (117) detektiert wird; und
Ändern der Transparenz der Benutzerschnittstelle auf Basis der Ermittlung, wobei, als Antwort auf die Ermittlung, dass das Berührungsereignis durch den ersten Berührungssensor detektiert wird, die Transparenz verringert wird, und
wobei, als Antwort auf die Ermittlung, dass das Berührungsereignis durch den zweiten Berührungssensor detektiert wird, die Transparenz erhöht wird,
wobei die Änderung der Transparenz der Benutzerschnittstelle das Ändern einer Helligkeit des Berührungsbildschirms (110) umfasst, wobei die Transparenz der Benutzerschnittstelle mit erhöhter Helligkeit abnimmt und mit verringerter Helligkeit zunimmt.

2. Verfahren nach Anspruch 1, ferner umfassend:
Ermitteln einer durchschnittlichen Helligkeit der Benutzerschnittstelle durch Berechnen der Helligkeit des Hintergrundes und des Inhalts,
wobei die Änderung der Transparenz der Benutzerschnittstelle auf Basis der Ermittlung umfasst: Ändern der durchschnittlichen Helligkeit auf ein ermitteltes Niveau.

3. Verfahren nach Anspruch 1, wobei das Berührungsereignis einen Kontaktbereich mit dem transparenten Berührungsbildschirm umfasst; und wobei
Ändern der Transparenz der Benutzerschnittstelle auf Basis der Ermittlung umfasst:
Ändern der Transparenz der Benutzerschnittstelle im Kontaktbereich; und
Beibehalten der Transparenz der Benutzerschnittstelle in einem zweiten Bereich, der außerhalb des Kontaktbereichs angeordnet ist.

4. Verfahren nach Anspruch 3, wobei die Änderung der Transparenz der Benutzerschnittstelle auf Basis der Ermittlung ferner umfasst:
Ändern der Transparenz der Benutzerschnittstelle in einem dritten Bereich der Benutzerschnittstelle, der zwischen dem Kontaktbereich und dem zweiten Bereich angeordnet ist.

5. Verfahren nach Anspruch 1, wobei das Berührungsereignis einen Kontaktbereich mit dem transparenten Berührungsbildschirm umfasst; und
wobei die Änderung der Transparenz der Benutzerschnittstelle auf Basis der Ermittlung umfasst:
Ermitteln eines zweiten Bereichs der Benutzerschnittstelle, der mit dem Kontaktbereich verbunden ist;
Ändern der Transparenz von Inhalten, die auf dem zweiten Bereich abgebildet (gemappt) sind; und
Beibehalten der Transparenz der Benutzerschnittstelle in einem dritten Bereich der Benutzerschnittstelle, der außerhalb des zweiten Bereichs angeordnet ist.

6. Verfahren nach Anspruch 1, wobei der transparente Berührungsbildschirm in einem Endgerät angeordnet ist, wobei das Verfahren ferner umfasst:
Ermitteln eines Neigungswinkels des Endgeräts; und
Ändern der Transparenz der Benutzerschnittstelle gemäß dem Neigungswinkel.

7. Verfahren nach Anspruch 1, ferner umfassend:
Ermitteln einer Größe eines Bereichs der Benutzerschnittstelle, der dem Berührungsereignis entspricht,
wobei ein Ausmaß der Änderung in der Transparenz auf der Größe basiert.

8. Endgerät, umfassend:
einen zweiseitigen aus transparentem Material hergestellten Berührungsbildschirm (110), der ausgelegt ist, einen Hintergrund und Inhalt in Verbindung mit einer Benutzerschnittstelle anzuzeigen, wobei der Berührungsbildschirm (110) umfasst: einen ersten Berührungssensor (113), der auf einer ersten Oberfläche des transparenten Berührungsbildschirms(110) angeordnet ist und einen zweiten Berührungssensor (117), der auf einer zweiten Oberfläche des transparenten Berührungsbildschirms (110) angeordnet ist, wobei die zweite Oberfläche der ersten Oberfläche gegenüberliegt; und
eine Steuereinheit (120), die ausgelegt ist, Folgendes zu tun:
Empfangen einer Anzeige eines Berührungsereignisses mit dem Berührungsbildschirm (110);
Ermitteln, ob das Berührungsereignis durch den ersten Berührungssensor oder den zweiten Berührungssensor detektiert wird; und
Bewirken, mindestens teilweise, einer Änderung in Transparenz des transparenten Berührungsbildschirms (110) auf Basis der Ermittlung,
wobei, als Antwort auf eine Ermittlung, dass das Berührungsereignis durch den ersten Berührungssensor (113) detektiert wird, die Änderung eine Verringerung in Transparenz ist,
wobei, als Antwort auf eine Ermittlung, dass das Berührungsereignis durch den zweiten Berührungssensor (117) detektiert wird, die Änderung eine Zunahme in Transparenz ist,
wobei die sich ändernde Transparenz der Benutzerschnittstelle das Ändern einer Helligkeit des Berührungsbildschirms (110) umfasst, wobei die Transparenz der Benutzerschnittstelle mit erhöhter Helligkeit abnimmt und mit verringerter Helligkeit zunimmt.

9. Endgerät nach Anspruch 8, wobei die Steuereinheit ausgelegt ist, Folgendes zu tun:
Ermitteln, als Antwort auf den Empfang der Anzeige, eines durchschnittlichen Helligkeitsniveaus der Benutzerschnittstelle; und
Herbeiführen, mindestens teilweise, der Änderung in Transparenz durch Ändern der durchschnittlichen Helligkeit auf ein vorbestimmtes Helligkeitsniveau der Benutzerschnittstelle.

10. Endgerät nach Anspruch 8, wobei:
das Berührungsereignis einen Kontaktbereich mit dem transparenten Berührungsbildschirm umfasst; und
die Steuereinheit ausgelegt ist, Folgendes zu tun:
Herbeiführen, mindestens teilweise, dass die Änderung in Transparenz im Kontaktbereich bewirkt wird; und
Herbeiführen, mindestens teilweise, das Transparenz der Benutzerschnittstelle in einem zweiten Bereich, der außerhalb des Kontaktbereichs angeordnet ist, beibehalten wird.

11. Endgerät nach Anspruch 10, wobei die Steuereinheit ausgelegt ist, Folgendes zu tun:
Herbeiführen, mindestens teilweise, dass die Änderung in Transparenz in einem dritten Bereich der Benutzerschnittstelle auf Basis der Ermittlung bewirkt wird, wobei der dritte Bereich zwischen dem zweiten Bereich und dem Kontaktbereich angeordnet ist.

12. Endgerät nach Anspruch 8, wobei:
das Berührungsereignis einen Kontaktbereich mit dem transparenten Berührungsbildschirm umfasst; und
die Steuereinheit ausgelegt ist, Folgendes zu tun:
Ermitteln eines zweiten Bereichs der Benutzerschnittstelle, der mit dem Kontaktbereich verbunden ist;
Herbeiführen, mindestens teilweise, dass die Änderung in Transparenz im Inhalt bewirkt wird, der mit dem zweiten Bereich verbunden ist; und
Herbeiführen, mindestens teilweise, das Transparenz der Benutzerschnittstelle in einem dritten Bereich, der außerhalb des zweiten Bereichs angeordnet ist, beibehalten wird.

13. Endgerät nach Anspruch 8, das ferner eine Erfassungseinheit (140) für Neigungswinkel umfasst, die ausgelegt ist, einen Neigungswinkel des Endgeräts zu ermitteln,
wobei die Steuereinheit (120) ausgelegt ist, mindestens teilweise, herbeizuführen, dass die Transparenz der Benutzerschnittstelle gemäß dem Neigungswinkel geändert wird.

14. Endgerät nach Anspruch 8, wobei die Steuereinheit ausgelegt ist, Folgendes zu tun:
Ermitteln einer Größe eines Bereichs der Benutzerschnittstelle, der dem Berührungsereignis entspricht; und
Herbeiführen, mindestens teilweise, das ein Ausmaß der Änderung in Transparenz auf der Größe des Bereichs basieren soll.

## Revendications

1. Procédé comprenant :
l'affichage, par l'intermédiaire d'un écran tactile biface (110) réalisé dans un matériau transparent, d'une interface utilisateur comprenant un arrière-plan et un contenu, l'écran tactile transparent comprenant :
un premier capteur tactile (113) disposé sur une première surface de l'écran tactile (110) ; et
un second capteur tactile (117) disposé sur une seconde surface de l'écran tactile (110), la seconde surface étant opposée à la première surface ;
la détection d'un événement de toucher avec l'écran tactile (110) ;
la détermination que l'événement de toucher est détecté par le biais du premier capteur tactile (113) ou du second capteur tactile (117); et
le changement de la transparence de l'interface utilisateur en fonction de la détermination,
dans lequel, en réponse à la détermination que l'événement de toucher est détecté par le biais du premier capteur tactile, la transparence est diminuée, et
dans lequel, en réponse à la détermination que l'événement de toucher est détecté par le biais du second capteur tactile, la transparence est augmentée,
dans lequel le changement de la transparence de l'interface utilisateur comprend le changement d'une brillance de l'écran tactile (110), la transparence de l'interface utilisateur diminuant avec une brillance accrue et augmentant avec une brillance réduite.

2. Procédé selon la revendication 1, comprenant en outre :
la détermination d'une brillance moyenne de l'interface utilisateur en calculant la brillance de l'arrière-plan et du contenu,
dans lequel le changement de la transparence de l'interface utilisateur en fonction de la détermination comprend : le changement de la brillance moyenne à un niveau déterminé.

3. Procédé selon la revendication 1, dans lequel l'événement de toucher comprend une zone de contact avec l'écran tactile transparent ; et dans lequel
le changement de la transparence de l'interface utilisateur en fonction de la détermination comprend :
le changement de la transparence de l'interface utilisateur dans la zone de contact ; et
le maintien de la transparence de l'interface utilisateur dans une deuxième zone disposée en dehors de la zone de contact.

4. Procédé selon la revendication 3, dans lequel le changement de la transparence de l'interface utilisateur en fonction de la détermination comprend en outre :
le changement de la transparence de l'interface utilisateur dans une troisième zone de l'interface utilisateur disposée entre la zone de contact et la deuxième zone.

5. Procédé selon la revendication 1, dans lequel l'événement de toucher comprend une zone de contact avec l'écran tactile transparent ; et
dans lequel le changement de la transparence de l'interface utilisateur en fonction de la détermination comprend en outre :
la détermination d'une deuxième zone de l'interface utilisateur associée à la zone de contact ;
le changement de la transparence de contenus mis en correspondance avec la deuxième zone ; et
le maintien de la transparence de l'interface utilisateur dans une troisième zone de l'interface utilisateur disposée en dehors de la deuxième zone.

6. Procédé selon la revendication 1, dans lequel l'écran tactile transparent est disposé dans un terminal, le procédé comprenant en outre :
la détermination d'un angle d'inclinaison du terminal ; et
le changement de la transparence de l'interface utilisateur en fonction de l'angle d'inclinaison.

7. Procédé selon la revendication 1, comprenant en outre :
la détermination d'une taille d'une zone de l'interface utilisateur correspondant à l'événement de toucher,
dans lequel une étendue du changement de la transparence est fonction de la taille.

8. Terminal comprenant :
un écran tactile biface (110) réalisé dans un matériau transparent configuré pour afficher un arrière-plan et un contenu en association avec une interface utilisateur, l'écran tactile (110) comprenant : un premier capteur tactile (113) disposé sur une première surface de l'écran tactile transparent (110) et un second capteur tactile (117) disposé sur une seconde surface de l'écran tactile transparent (110), la seconde surface étant opposée à la première surface ; et
une unité de commande (120) configurée pour :
recevoir une indication d'un événement de toucher avec l'écran tactile (110) ;
déterminer que l'événement de toucher est détecté par le biais du premier capteur tactile ou du second capteur tactile ; et
entraîner, au moins en partie, un changement de la transparence de l'écran tactile transparent (110) en fonction de la détermination,
dans lequel, en réponse à une détermination que l'événement de toucher est détecté par le biais du premier capteur tactile (113), le changement est une diminution de la transparence,
dans lequel, en réponse à une détermination que l'événement de toucher est détecté par le biais du second capteur tactile (117), le changement est une augmentation de la transparence, et
dans lequel le changement de la transparence de l'interface utilisateur comprend le changement d'une brillance de l'écran tactile (110), la transparence de l'interface utilisateur diminuant avec une brillance accrue et augmentant avec une brillance réduite.

9. Terminal selon la revendication 8, dans lequel l'unité de commande est configurée pour :
déterminer, en réponse à la réception de l'indication, un niveau de brillance moyen de l'interface utilisateur ; et
entraîner, au moins en partie, le changement de transparence en changeant la brillance moyenne à un niveau de brillance prédéterminé de l'interface utilisateur.

10. Terminal selon la revendication 8, dans lequel :
l'événement de toucher comprend une zone de contact avec l'écran tactile transparent ; et
l'unité de commande est configurée pour :
entraîner, au moins en partie, l'exécution du changement de transparence dans la zone de contact ; et
entraîner, au moins en partie, le maintien de la transparence de l'interface utilisateur dans une deuxième zone disposée en dehors de la zone de contact.

11. Terminal selon la revendication 10, dans lequel l'unité de commande est configurée pour :
entraîner, au moins en partie, l'exécution d'un changement de transparence dans une troisième zone de l'interface utilisateur en fonction de la détermination, la troisième zone étant disposée entre la deuxième zone et la zone de contact.

12. Terminal selon la revendication 8, dans lequel :
l'événement de toucher comprend une zone de contact avec l'écran tactile transparent ; et
l'unité de commande est configurée pour :
déterminer une deuxième zone de l'interface utilisateur associée à la zone de contact ;
entraîner, au moins en partie, l'exécution du changement de transparence dans le contenu associé à la deuxième zone ; et
entraîner, au moins en partie, le maintien de la transparence de l'interface utilisateur dans une troisième zone disposée en dehors de la deuxième zone.

13. Terminal selon la revendication 8, comprenant en outre une unité de détection d'angle d'inclinaison (140) configurée pour déterminer un angle d'inclinaison du terminal,
dans lequel l'unité de commande (120) est configurée pour entraîner, au moins en partie, un changement de la transparence de l'interface utilisateur en fonction de l'angle d'inclinaison.

14. Terminal selon la revendication 8, dans lequel l'unité de commande est configurée pour :
déterminer une taille d'une zone de l'interface utilisateur correspondant à l'événement de toucher ; et
entraîner, au moins en partie, une étendue du changement de la transparence en fonction de la taille de la zone.
